# EUROPÄISCHE PATENTSCHRIFT

(11) **EP 2 763 879 B1**
(45) Veröffentlichungstag und Bekanntmachung des Hinweises auf die Patenterteilung: **28.02.2018**
(21) Anmeldenummer: 12746317.2
(22) Anmeldetag: 06.08.2012
(51) Int. Cl.: B60W 50/08

(54) **VERFAHREN ZUM AKTIVIEREN EINES FAHRERASSISTENZSYSTEMS**
METHOD FOR ACTIVATING A DRIVER ASSISTANCE SYSTEM
PROCÉDÉ D'ACTIVATION D'UN SYSTÈME D'AIDE À LA CONDUITE

(30) Priorität: 04.10.2011 DE 102011083944
(43) Veröffentlichungstag der Anmeldung: 13.08.2014
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2012/065343
(87) Internationale Veröffentlichungsnummer: WO 2013/050189

(56) Entgegenhaltungen:
- EP-A1- 2 293 255
- WO-A1-2007/090896
- DE-A1- 10 056 756
- US-A1- 2005 030 184
- US-A1- 2010 063 697

## Beschreibung

Die Erfindung betrifft ein Verfahren zum Aktivieren eines Fahrerassistenzsystems gemäß Patentanspruch 1, ein Fahrerassistenzsystem gemäß Patentanspruch 14 und ein Computerprogrammprodukt gemäß Patentanspruch 15.

### Stand der Technik

Im Stand der Technik sind verschiedene Verfahren zum Aktivieren eines Fahrerassistenzsystems bekannt. Unter einem Fahrerassistenzsystem wird beispielsweise ein automatische Abstandsregelung, eine automatische Geschwindigkeitsregelung oder ein automatisches Spurhaltesystem verstanden.

Aus DE 10 2009 028 637 A1 sind ein Verfahren und eine Vorrichtung zur benutzerbezogenen Einstellung eines Fahrerinformationssystems bekannt. Bei dem beschriebenen Verfahren zur benutzerbezogenen Einstellung eines Fahrerinformationssystems werden Informationen aus einem vergangenem Verhalten des Fahrers, insbesondere das Fahrverhalten oder eingegebene Informationen gespeichert und zum Treffen einer Entscheidung herangezogen, wobei eine benutzerbezogene Entscheidungsmatrix erstellt wird, die in Abhängigkeit von Betriebsinformationen anpassbar und zum Treffen einer Vorentscheidung mittels des Fahrerinformationssystems herangezogen wird. Dabei werden Benutzerdaten aus anderen Bereichen zur Anpassung der benutzerbezogenen Entscheidungsmatrix herangezogen.

Die Offenlegungsschrift EP 2 293 255 A1 zeigt ein Verfahren zur Steuerung eines Kraftfahrzeugs, wobei wenigstens ein fahrerspezifischer, das Fahrkönnen des Fahrers beschreibender Evaluationswert ermittelt wird. Abhängig von dem Evaluationswert wird wenigstens ein für den Fahrer verfügbares Leistungsmerkmal und/oder wenigstens eine Fahrfunktion eines Systems des Kraftfahrzeugs aktiviert oder deaktiviert.

Die Offenlegungsschrift US 2010/063697 A1 zeigt ein System und ein Verfahren zum Adaptieren eines automatischen mechanischen Transmissionssystems eines Schwerlastfahrzeuges.

### Offenbarung der Erfindung

Die Aufgabe der Erfindung besteht darin, ein verbessertes Verfahren zum Aktivieren eines Fahrerassistenzsystems bereitzustellen. Die Aufgabe der Erfindung wird durch das Verfahren gemäß Patentanspruch 1, durch das Fahrerassistenzsystem gemäß Patentanspruch 14 und durch das Computerprogrammprodukt gemäß Patentanspruch 15 gelöst. Weitere vorteilhafte Ausführungsformen der Erfindung sind in den abhängigen Ansprüchen angegeben.

Ein Vorteil des beschriebenen Verfahrens besteht darin, dass ein Fahrerassistenzsystem individuell für den Fahrer wenigstens teilweise oder vollständig in einem festgelegten Umfang bereitgestellt wird. Auf diese Weise wird eine erhöhte Sicherheit bei der Nutzung von Fahrerassistenzsystemen ermöglicht. Dieser Vorteil wird dadurch erreicht, dass eine Eignung des Fahrers zur Nutzung des Fahrerassistenzsystems überprüft wird und bei der Entscheidung, ob das Fahrerassistenzsystem aktiviert werden soll, berücksichtigt wird. Damit kann abgestimmt auf die Eignung des Fahrers eine sichere Nutzung des Fahrerassistenzsystems erreicht werden.

In einer Weiterbildung der Erfindung wird ein Bedienungsverhalten des Fahrzeugs durch den Fahrer ermittelt. Das erfasste Bedienungsverhalten wird dazu verwendet, um die Eignung des Fahrers für die Nutzung des gewünschten Fahrerassistenzsystems zu beurteilen. Somit kann sichergestellt werden, dass ein Fahrer, der in der Vergangenheit beispielsweise ein Fahrerassistenzsystem nicht korrekt benutzt hat, für die Zukunft das Fahrerassistenzsystem nicht oder nur nach einer erneuten Eingabe benutzen kann. Somit werden Erfahrungswerte beim Nutzen des Fahrerassistenzsystems verwendet, um das Fahrerassistenzsystem nur bedingt oder gar nicht dem Fahrer freizugeben.

In einer weiteren Ausführungsform wird das gewünschte Fahrerassistenzsystem aktiviert, wenn die Überprüfung ergibt, dass der Fahrer geeignet ist, und wobei die Aktivierung des gewünschten Fahrerassistenzsystems unterbunden wird, wenn der Fahrer als ungeeignet eingeschätzt wird. Bei dieser Ausführungsform hat der Fahrer selbst keine Möglichkeit, ein Fahrerassistenzsystem zu aktivieren, für das der Fahrer als ungeeignet eingeschätzt wurde. Somit kann ein gefährlicher Gebrauch eines Fahrerassistenzsystems vermieden werden.

In einer weiteren Ausführungsform kann durch eine entsprechende Eingabe der Fahrer ein gewünschtes Fahrerassistenzsystem aktivieren, obwohl er als ungeeignet eingeschätzt wurde. Damit besteht die Möglichkeit für den Fahrer, trotz einer ungeeigneten Einschätzung das Fahrerassistenzsystem zu aktivieren. Somit kann beispielsweise ein in der Vergangenheit als ungeeignet sich verhaltender Fahrer mit einer entsprechend erhöhten Aufmerksamkeit oder einem entsprechend verbesserten Verhalten das Fahrerassistenzsystem nutzen und für die Zukunft als geeignet eingeschätzt werden. Somit ist eine erhöhte Flexibilität des beschriebenen Verfahrens möglich.

In einer weiteren Ausführungsform ist für die Überprüfung der Eignung des Fahrers ein abgespeicherter Wert vorgesehen, der vorzugsweise individuell für mehrere Fahrer abgespeichert sein kann. Auf diese Weise ist ein einfacher Vergleich des erfassten Bedienungsverhaltens des Fahrers mit dem abgespeicherten Wert ausreichend, um die Eignung des Fahrers beurteilen zu können.

In einer weiteren Ausführungsform wird das Bedienungsverhalten des Fahrers erfasst, während ein Fahrerassistenzsystem des Fahrzeugs, insbesondere das gewünschte Fahrerassistenzsystem, aktiv ist. Somit ist es möglich, das Bedienungsverhalten des Fahrers nicht nur generell, sondern in Bezug auf Fahrerassistenzsysteme, insbesondere in Bezug auf ein festgelegtes Fahrerassistenzsystem, zu ermitteln. Damit wird eine aussagekräftige Aussage über das Bedienungsverhalten möglich.

In einer weiteren Ausführungsform können mehrere Bedienungsverhalten des Fahrers erfasst werden. Beispielsweise können bei Vorliegen unterschiedlicher aktiver Fahrerassistenzsysteme und/oder unterschiedlicher Fahrsituationen mehrere Werte für das Bedienungsverhalten des Fahrers ermittelt werden. Für die Eignung kann entweder der Wert verwendet werden, der während des gewünschten Fahrerassistenzsystems ermittelt wurde oder es wird ein Mittelwert der Werte für das Bedienungsverhalten des Fahrers ermittelt und für den Vergleich mit dem abgespeicherten Wert verwendet.

In einer weiteren Ausführungsform wird für die Beurteilung der Eignung des Fahrers ein Wert für die Eignung des Fahrers verwendet, der während eines aktiven Zustands des gewünschten Fahrerassistenzsystems ermittelt wurde.

In einer weiteren Ausführungsform wird zusätzlich eine vorliegende Fahrsituation und ein entsprechender Wert für die Eignung des Fahrers für die Fahrsituation für die Beurteilung der Eignung berücksichtigt.

Die Erfindung wird im Folgenden anhand der Figuren näher erläutert. Es zeigen:
Figur 1 eine schematische Darstellung eines Fahrzeugs mit einem Fahrerassistenzsystem;
Figur 2 einen schematischen Programmablauf zum Aktivieren eines Fahrerassistenzsystems; und
Figur 3 einen schematischen Programmablauf zur Ermittlung eines Werts für eine Eignung des Fahrers.

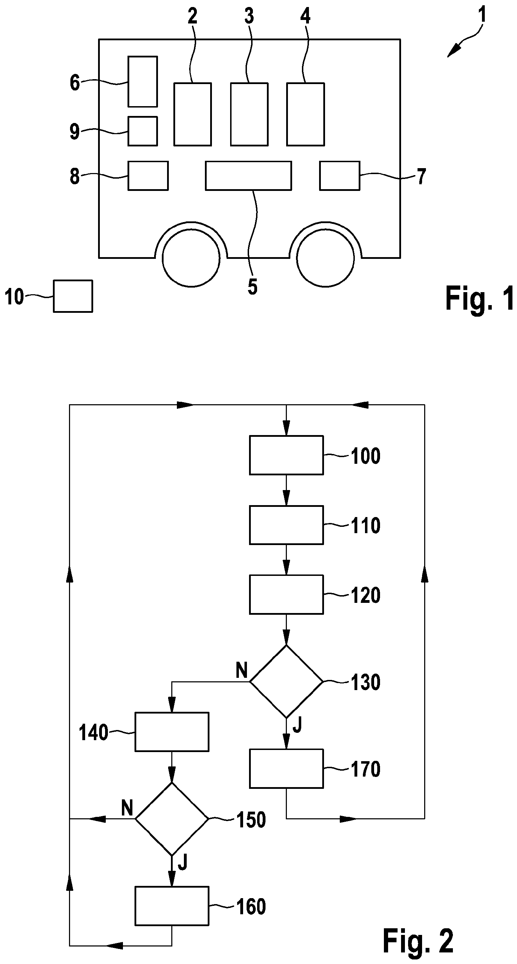

Figur 1 zeigt in einer schematischen Darstellung ein Fahrzeug 1, das eine Recheneinheit 2 aufweist, die mit einem Fahrerassistenzsystem 3, einer Eingabe 4 und einer Ausgabe 5 verbunden ist. Die Recheneinheit 2 ist zudem mit Sensoren 6 verbunden, die beispielsweise Parameter des Fahrzeugs, Umfeldinformationen des Fahrzeugs und/oder Informationen über ein Verhalten des Fahrers erfassen und an die Recheneinheit 2 übermitteln. Die Recheneinheit 2 ist beispielsweise als Steuergerät ausgebildet, das die für das Fahrzeug notwendigen Funktionen steuert. Abhängig von der gewählten Ausführungsform kann die Recheneinheit 2 zusätzlich zu einer Steuereinheit des Fahrzeugs ausgebildet sein. Ein Fahrer des Fahrzeugs kann über die Eingabe 4 Steuerbefehle und/oder Eingabebefehle an die Recheneinheit 2 und/oder an das Steuergerät abgeben. Die Eingabe 4 stellt beispielsweise ein Gaspedal, einen Schalter oder einen Touch-Screen dar.

Der Fahrer kann zudem über die Betätigung der Eingabe 4 ein Fahrerassistenzsystem aktivieren. Als Fahrerassistenzsystem können beispielsweise ein Spurhaltesystem, ein Ausweichsystem, ein Notbremssystem, eine automatische Abstandsregelung und eine automatische Geschwindigkeitsregelung verwendet werden. Zudem kann das Fahrzeug über ein Fahrerinformationssystem 7 verfügen, das beispielsweise als Navigationssystem und/oder als Informationssystem ausgebildet ist, das Daten und Informationen über eine drahtlose Verbindung von einem zentralen Datendienst wie beispielsweise dem Internet abruft und an den Fahrer weitergibt oder bei Ausführen eines Fahrerassistenzsystems berücksichtigt.

Weiterhin kann das Fahrerassistenzsystem auch ein autonomes Fahrsystem beinhalten, das dem Fahrer die Verantwortung für das Führen des Fahrzeugs wenigstens zeitweise abnimmt. Die Sensoren 6 können als einfache Sensoren beispielsweise zur Erfassung von Lenkbewegungen, zur Erfassung einer Geschwindigkeit, und/oder zur Erfassung von Beschleunigungen ausgebildet sein. Zudem können die Sensoren 6 auch in Form von komplexeren Sensorsystemen ausgebildet sein, die beispielsweise ein Fahrerermüdungssystem oder ein Fahreraufmerksamkeitssystem beinhalten. Als Basis dieser Systeme können beispielsweise Innenkameras vorgesehen sein, die den Fahrer beobachten. Zudem kann ein Fahrererkennungssystem als Sensor 6 vorgesehen sein, das erkennt, welcher Fahrer am Steuer sitzt. Auch hierzu werden beispielsweise Innenraumkameras mit visueller Auswertung, z.B. des Kopfes oder der Augen verwendet. Zudem können codierte Schlüsselsysteme verwendet werden, die individuell einem Fahrer zugeordnet sind. Weiterhin kann das Fahrverhalten wie z.B. Bremsen, Gasgeben oder Schalten usw. verwendet werden, um den Fahrer zu erkennen.

Weiterhin kann das Fahrzeug über ein Kommunikationsgerät 8 verfügen, über das Daten mit anderen Fahrzeugen oder mit einer Infrastruktur ausgetauscht wird. Das Kommunikationsgerät 8 kann beispielsweise ausgebildet sein, um Daten z.B. über eine Ampelphase oder die vorgeschriebene Geschwindigkeit mit anderen Fahrzeugen oder mit einer externen Recheneinheit 10 auszutauschen. Dazu können Datenübertragungssysteme wie beispielsweise WLAN oder LTE verwendet werden. Zudem können über das Kommunikationsgerät 8 Daten wie z.B. die eigene Position, die eigene Geschwindigkeit an andere Fahrzeuge oder die externe Recheneinheit übertragen werden. Weiterhin kann das Navigationssystem 7 Informationen über Straßenverläufe, Steigungen, Fahrbahnspuren usw. oder teilweise Informationen über Infrastruktur wie z.B. Ampeln, Verkehrsschilder usw. in einer Kartendatenbank abspeichern. Zudem kann über das Navigationssystem oder über das Kommunikationsgerät auf externe Datenbanken zugegriffen werden, in denen z.B. Straßendaten und aktuelle Informationen über den Verkehr erhältlich sind. Weiterhin kann das Fahrzeug über einen eigenen Datenspeicher 9 verfügen, in dem Daten langfristig gespeichert werden können. Abhängig von der gewählten Ausführungsform kann der Datenspeicher 9 auch im Navigationssystem integriert sein. Das Kommunikationsgerät 8 kann beispielsweise auch in Form eines mobilen Kommunikationsgeräts, wie beispielsweise einem Mobiltelefon, insbesondere einem Smart-Phone ausgebildet sein, mit dem Informationen drahtlos beispielsweise aus dem Internet über aktuelle Daten, wie z.B. Staus, Unfälle, Baustellen usw. abgefragt werden können. Die Ausgabe 5 kann beispielsweise in Form eines Displays ausgebildet sein, um aktuelle Daten, wie z.B. Staus, Unfälle und Baustellen dem Fahrer auszugeben.

Eine Idee der Erfindung besteht darin, ein Verfahren bereitzustellen, das die Eignung eines Fahrers für die Verwendung eines Fahrerassistenzsystems überprüfen kann. Unter dem Begriff Fahrerassistenzsystem wird jede Art von Funktion oder Teilfunktion des Fahrzeugs verstanden, die den Fahrer beim Führen und Bedienen des Fahrzeugs unterstützt. Beispielsweise kann ein Fahrerassistenzsystem eine teilweise oder vollständige autonome Fahrfunktion zum Führen des Fahrzeugs darstellen.

Für die Entscheidung, ob der Fahrer für die Nutzung eines Fahrerassistenzsystems geeignet ist, wird beispielsweise das Verhalten des Fahrers in der Vergangenheit berücksichtigt. Dazu wird mit Hilfe von festgelegten Verfahren und festgelegten Parametern ein Verhalten des Fahrers in bestimmten Fahrsituationen bei Vorliegen eines aktiven Fahrerassistenzsystems überprüft.

Beispiele für semiautonome Fahrerassistenzsysteme sind ein automatisches Bremsen, ein automatisches Lenken, ein automatisches Ausweichen und/oder eine Kombinationen dieser Funktionen bis zu einem vollautonomen Führen des Fahrzeugs.

Figur 2 zeigt einen schematischen Programmablauf zur Durchführung eines einfachen Verfahrens zum Aktivieren eines Fahrerassistenzsystems. Bei Programmpunkt 100 fährt der Fahrer bereits mit dem Fahrzeug und möchte ein bestimmtes Fahrerassistenzsystem, beispielsweise ein automatisches Bremsen, ein automatisches Lenken und/oder ein automatisches Ausweichen durch Betätigung der Eingabe 4 aktivieren. In einem folgenden Programmpunkt 110 erfasst die Recheneinheit 2 den Wunsch des Fahrers, ein bestimmtes Fahrerassistenzsystem aktivieren zu wollen. Anschließend überprüft die Recheneinheit 2 beim folgenden Programmpunkt 120, ob beispielsweise im Datenspeicher 9 ein Wert für die Eignung des Fahrers für das gewählte Fahrerassistenzsystem vorliegt. Beim folgenden Programmpunkt 130 vergleicht die Recheneinheit 2 den vorliegenden Wert für die Eignung des Fahrers mit einem im Datenspeicher 9 abgelegten Vergleichswert. Ergibt der Vergleich bei Programmpunkt 130, dass der Wert für die Eignung des Fahrers kleiner als der Vergleichswert ist, so wird zu Programmpunkt 140 verzweigt. Der Programmpunkt 140 gibt die Recheneinheit 2 über die Ausgabe 4 eine Information an den Fahrer, dass die Benutzung des gewünschten Fahrerassistenzsystems nicht empfohlen wird. Anschließend überwacht die Recheneinheit 2 bei einem folgenden Programmpunkt 150, ob der Fahrer durch eine entsprechende Eingabe trotzdem das gewünschte Fahrerassistenzsystem aktiviert. Ist dies der Fall, so wird zu Programmpunkt 160 verzweigt und das gewünschte Fahrerassistenzsystem aktiviert. Wird jedoch von dem Fahrer nach Programmpunkt 140 innerhalb einer festgelegten Zeitdauer keine erneute Aktivierung des Fahrerassistenzsystems durchgeführt, so wird zu Programmpunkt 100 zurück verzweigt.

Wird bei Programmpunkt 150 das Fahrerassistenzsystem vom Fahrer trotz der Ablehnung durch die Recheneinheit 2 erneut aktiviert, wird diese Entscheidung des Fahrers von der Recheneinheit 2 im Speicher 9 abgespeichert.

Ergibt die Abfrage bei Programmpunkt 130, dass der abgespeicherte Wert für die Eignung des Fahrers für das gewünschte Fahrerassistenzsystem größer als der Vergleichswert ist, so wird zu Programmpunkt 170 verzweigt. Am Programmpunkt 170 aktiviert der Fahrer das gewünschte Fahrerassistenzsystem. Anschließend wird zu Programmpunkt 100 zurück verzweigt.

Der verwendete Vergleichswert kann abhängig von der gewählten Ausführungsform ein allgemeiner Vergleichswert sein oder wiederum von dem gewünschten Fahrerassistenzsystem und/oder von einer bestimmten Fahrsituation abhängen. Die Fahrsituation kann beispielsweise eine Fahrt auf einer Autobahn, eine Fahrt auf einer Landstraße, eine Fahrt innerorts, eine Fahrt im Stau, eine Fahrt bei festgelegten Wetterbedingungen wie beispielsweise Regen, Nebel, Schnee, eine Fahrt tagsüber oder eine Fahrt nachts beinhalten. Der Vergleichswert kann von einzelnen oder mehreren dieser genannten Fahrsituationen abhängen. Abhängig von der gewählten Ausführungsform überprüft die Recheneinheit 2 bei der Anfrage, welche Fahrsituation vorliegt, und verwendet für den Vergleich einen Vergleichswert, der der Fahrsituation am ehesten entspricht. Zudem kann als Fahrsituation auch die bisherige Fahrzeit des Fahrers, die Müdigkeit des Fahrers und/oder die Aufmerksamkeit des Fahrers berücksichtigen.

Abhängig von der gewählten Ausführungsform können vor der Entscheidung der Recheneinheit, dass die gewünschte Fahrfunktion aktiviert wird, d.h. vor dem Programmpunkt 160 oder 170, ein zusätzliches Ausschließungskriterium überprüft werden. Beispielsweise können bestimmte Geschwindigkeitsbereiche, Wetterverhältnisse oder Fahrzustände des Fahrers wie z.B. erhöhte Müdigkeit, geringe Aufmerksamkeit oder Trunkenheit des Fahrers dazu verwendet werden, um trotz der vorliegenden Eignung des Fahrers für das gewünschte Fahrerassistenzsystem das Fahrerassistenzsystem nicht zu aktivieren. Zudem kann abhängig von der gewählten Ausführungsform bei Vorliegen eines Ausschließungskriteriums die Aktivierung des gewünschten Fahrerassistenzsystems durch die Recheneinheit 2 nicht zugelassen werden. Beispielsweise kann die Recheneinheit 2 bei Erkennen eines müden Fahrers die Aktivierung eines vollautomatischen Fahrens des Fahrzeugs verbieten. Bei Erkennen einer entsprechenden Situation gibt die Recheneinheit 2 ein Alarmsignal an den Fahrer aus.

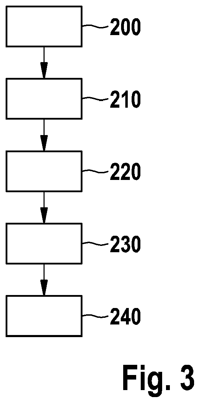

Figur 3 zeigt in einer schematischen Darstellung ein Verfahren zur Ermittlung eines Werts für die Eignung des Fahrers für die Aktivierung eines Fahrerassistenzsystems. Bei Programmpunkt 200 fährt ein Fahrer ein Fahrzeug. Beim folgenden Programmpunkt 210 erfasst die Recheneinheit 2, welcher Fahrer das Fahrzeug fährt. Dazu können Verfahren wie z.B. codierte Schlüssel, Kameras zur Erkennung eines Gesichts oder auch ein Fahrverhalten verwendet werden. Die Recheneinheit 210 speichert beim folgenden Programmpunkt 220 den erkannten Fahrer in der Datenbank 9 ab. Anschließend erfasst die Recheneinheit beim folgenden Programmpunkt 230, wie der Fahrer sich bei der Verwendung von aktiven Fahrerassistenzsystemen verhält. Dabei überwacht die Recheneinheit, ob sich der Fahrer bei der Benutzung des Fahrerassistenzsystems vertrauensvoll verhält. Dazu sind bestimmte Regeln und Parameter abgelegt, mit denen die Beurteilung der Verhaltens des Fahrers als vertrauensvoll für das bestimmte Fahrerassistenzsystem festlegen. Die Regeln und Parameter können individuell für verschiedene Fahrerassistenzsysteme festgelegt sein. Beispielsweise wird bei dem aktiven Fahrerassistenzsystem automatische Abstandsregelung überprüft, ob der Fahrer durch eigenes Gasgeben den automatisch eingeregelten Abstand zum vorausfahrenden Fahrzeug unterschreitet oder ob der Fahrer durch eigenes Bremsen den automatisch geregelten Abstand zum vorausfahrenden Fahrzeug vergrößert. Ein Fahrer kann als ungeeignet für das Fahrerassistenzsystem automatische Abstandsregelung eingestuft werden, wenn er während einer festgelegten Zeitdauer und/oder festgelegten Fahrstrecke den automatisch geregelten Abstand aktiv öfters als eine festgelegte Anzahl verändert. Im einfachsten Fall kann der Fahrer bereits bei einmaliger Veränderung des automatisch geregelten Abstands über eine Fahrstrecke von 5 km als ungeeignet bewertet werden.

Weiterhin kann ein Fahrer als ungeeignet für das Fahrerassistenzsystem autonomes Fahren, d.h. automatisches Lenken und automatisches Bremsen und automatisches Spurhalten als ungeeignet angesehen werden, wenn der Fahrer bei der Rückgabe der Verantwortung an den Fahrer die Rücknahme zur Führung des Fahrzeugs nicht innerhalb einer bestimmten Zeitdauer übernimmt.

Abhängig von dem gewählten Fahrerassistenzsystem können zusätzliche oder auch andere Parameter für die Beurteilung des Fahrers als ungeeignet verwendet werden.

Beim folgenden Programmpunkt 240 speichert die Recheneinheit 2 beispielsweise für die Fahrfunktion autonomes Fahren für den Fahrer A den Wert "ungeeignet" in der Datenbank ab. Der Wert "ungeeignet" kann beispielsweise in Form einer 0, der Wert "geeignet" in Form einer 2 abgespeichert sein. Als Vergleichswert kann bei diesem Beispiel der Wert 1 verwendet werden. Die gespeicherten Werte werden bei dem Verfahren nach Figur 2 verwendet.

Abhängig von der gewählten Ausführungsform kann für jedes Fahrerassistenzsystem ein Eignungswert des Fahrers erfasst werden. Will der Fahrer nun das entsprechende Fahrerassistenzsystem aktivieren, so wird zum Vergleich der erfasste Wert für die Eignung verwendet. Zudem sind beispielsweise für verschiedene Fahrerassistenzsysteme verschiedene Vergleichswerte abgelegt. Zudem kann abhängig von der gewählten Ausführungsform auch ein Kombinationswert der verschiedenen Werte für die Eignung des Fahrers für die verschiedenen Fahrerassistenzsysteme verwendet werden. Bei dieser Ausführungsform wird auch ein Kombinationswert für die Vergleichswerte der verschiedenen Fahrerassistenzsystem verwendet. Dabei können die Werte für die Eignung des Fahrers für die Fahrerassistenzsysteme und/oder die Vergleichswerte der Fahrerassistenzsysteme bei einer Mittelung unterschiedlich gewichtet werden.

Weiterhin können zusätzlich zu dem gewünschten Fahrerassistenzsystem weitere Umgebungsparameter bei der Mittlung der Eignung des Fahrers und/oder bei der Wahl des Vergleichswerts berücksichtigt werden. Dabei kann beispielsweise ein Fahren auf der Autobahn, auf der Landstraße oder innerhalb der Stadt unterschiedlich gewertet und gewichtet werden. Zudem können Umweltbedingungen wie z.B. schlechtes Wetter, d.h. Nebel, Schnee, Regen bei der Erfassung der Eignung des Fahrers und/oder bei der Wahl des Vergleichswerts berücksichtigt werden.

Weiterhin kann auch der Zustand des Fahrers bei der Wahl des Vergleichswerts berücksichtigt werden, um die Aktivierung eines Fahrerassistenzsystems zu erschweren bzw. zu behindern. Zudem kann, wie bereits ausgeführt, ein Ausschließlichkeitskriterium für die Aktivierung eines Fahrerassistenzsystems, wie z.B. erhöhte Müdigkeit des Fahrers, geringe Aufmerksamkeit des Fahrers, zu lange Fahrzeit oder Trunkenheit des Fahrers vorgesehen sein, das eine Aktivierung eines Fahrerassistenzsystems durch den Fahrer blockiert.

Abhängig von der gewählten Ausführungsform kann die Eignung des Fahrers laufend aktualisiert werden. Dies bedeutet, dass beispielsweise für jeden Fahrer Standardwerte für die Eignung für die Fahrerassistenzsysteme vorgegeben sind. Während des Bedienens des Fahrzeugs können die Werte für die Eignung für die Fahrerassistenzsysteme aufgrund des Verhaltens des Fahrers verbessert oder verschlechtert werden.

Die Daten über die Eignung des Fahrers und über die Vergleichswerte der Fahrfunktionen können im Speicher 9 des Fahrzeugs und/oder in einer externen Datenbank abgelegt sein, auf die der Fahrer zugreifen kann. Dazu kann ein entsprechendes Kommunikationsgerät 8 verwendet werden.

## Patentansprüche

1. Verfahren zum Aktivieren eines Fahrerassistenzsystems in einem Fahrzeug, wobei nach einem Aktivierungswunsch eines Fahrerassistenzsystems durch einen Fahrer überprüft wird, ob der Fahrer des Fahrzeuges geeignet ist, um das gewünschte Fahrerassistenzsystem zu benutzen, und wobei die Aktivierung des gewünschten Fahrerassistenzsystems abhängig von der Eignung des Fahrers durchgeführt wird.

2. Verfahren nach Anspruch 1, wobei ein Bedienungsverhalten des Fahrzeuges durch den Fahrer ermittelt wird, und wobei das erfasste Bedienungsverhalten verwendet wird, um eine Eignung des Fahrers für die Benutzug der gewünschten Fahrerassistenzfunktion zu beurteilen.

3. Verfahren nach einem der vorhergehenden Ansprüche, wobei das gewünschte Fahrerassistenzsystem aktiviert wird, wenn die Überprüfung ergibt, dass der Fahrer geeignet ist, und wobei die Aktivierung des gewünschten Fahrerassistenzsystems unterbunden wird, wenn der Fahrer als ungeeignet eingeschätzt wird.

4. Verfahren nach einem der vorhergehenden Ansprüche, wobei der Fahrer durch eine Eingabe das gewünschte Fahrerassistenzsystem aktivieren kann, obwohl der Fahrer als ungeeignet eingeschätzt wird.

5. Verfahren nach einem der vorhergehenden Ansprüche, wobei für die Überprüfung der Eignung des Fahrers ein abgespeicherter Wert berücksichtigt wird.

6. Verfahren nach Anspruch 5, wobei für verschiedene Fahrer verschiedene Werte abgespeichert sind, wobei der Fahrer mithilfe eines Detektionsverfahrens erkannt wird und der dem erkannten Fahrer zugeordnete Wert für die Überprüfung verwendet wird.

7. Verfahren nach einem der Ansprüche 5 oder 6, wobei aus einem Bedienungsverhalten des Fahrzeugs durch den Fahrer ein Wert ermittelt wird, der für einen Vergleich mit dem abgespeicherten Vergleichswert verwendet wird.

8. Verfahren nach einem der vorhergehenden Ansprüche, wobei das Bedienungsverhalten des Fahrers erfasst wird, während ein Fahrerassistenzsystem des Fahrzeugs aktiv ist.

9. Verfahren nach einem der vorhergehenden Ansprüche, wobei ein Bedienungsverhalten abhängig von einer bestimmten Fahrsituation erfasst wird.

10. Verfahren nach Anspruch 9, wobei das Bedienungsverhalten des Fahrers abhängig von der Fahrerassistenzfunktion und/oder abhängig von der Fahrsituation unterschiedlich bewertet wird.

11. Verfahren nach einem der vorhergehenden Ansprüche 2 bis 10, wobei ein Fahrer mithilfe eines Detektionsverhaltens erkannt wird, und wobei das Bedienungsverhalten individuell für jeden Fahrer erfasst und abgespeichert wird.

12. Verfahren nach einem der Ansprüche 1 bis 11, wobei für die Beurteilung der Eignung des Fahrers ein Wert für die Eignung des Fahrers verwendet wird, der während eines aktiven Zustands des gewünschten Fahrerassistenzsystems ermittelt wurde.

13. Verfahren nach einem der Ansprüche 1 bis 12, wobei zusätzlich eine vorliegende Fahrsituation und ein entsprechender Wert für die Eignung des Fahrers für die Fahrsituation für die Beurteilung der Eignung berücksichtigt wird.

14. Fahrerassistenzsystem mit einer Recheneinheit und mit einem Speicher, wobei die Recheneinheit mit einer Eingabe zum Eingeben eines Aktivierungswunsches verbunden ist und wobei die Recheneinheit ausgebildet ist, um ein Verfahren nach einem der vorhergehenden Ansprüche auszuführen.

15. Computerprogrammprodukt mit Programmcodemitteln, die geeignet sind, um auf einer Recheneinheit ein Verfahren gemäß den Ansprüchen 1 bis 13 auszuführen.

## Claims

1. Method for activating a driver assistance system in a vehicle, wherein following an activation request for a driver assistance system by a driver a check is performed to determine whether the driver of the vehicle is suitable to use the desired driver assistance system, and wherein the activation of the desired driver assistance system is performed on the basis of the suitability of the driver.

2. Method according to Claim 1, wherein a user behaviour by the driver in respect of the vehicle is ascertained, and wherein the detected user behaviour is used to assess a suitability of the driver for use of the desired driver assistance function.

3. Method according to either of the preceding claims, wherein the desired driver assistance system is activated if the result of the check is that the driver is suitable, and wherein the activation of the desired driver assistance system is prevented if the driver is deemed unsuitable.

4. Method according to one of the preceding claims, wherein the driver can activate the desired driver assistance system by means of an input even if the driver is deemed unsuitable.

5. Method according to one of the preceding claims, wherein a stored value is taken into consideration for the check on the suitability of the driver.

6. Method according to Claim 5, wherein different values are stored for different drivers, the driver being identified by means of a detection method and the value associated with the identified driver being used for the check.

7. Method according to either of Claims 5 and 6, wherein a user behaviour by the driver in respect of the vehicle is used to ascertain a value that is used for a comparison with the stored comparison value.

8. Method according to one of the preceding claims, wherein the user behaviour of the driver is detected while a driver assistance system of the vehicle is active.

9. Method according to one of the preceding claims, wherein a user behaviour is detected on the basis of a particular driving situation.

10. Method according to Claim 9, wherein the user behaviour of the driver is rated differently depending on the driver assistance function and/or depending on the driving situation.

11. Method according to one of the preceding Claims 2 to 10, wherein a driver is identified by means of a detection behaviour, and wherein the user behaviour is detected and stored individually for each driver.

12. Method according to one of Claims 1 to 11, wherein the assessment of the suitability of the driver involves a value for the suitability of the driver being used that has been ascertained during an active state of the desired driver assistance system.

13. Method according to one of Claims 1 to 12, wherein additionally a present driving situation and a corresponding value for the suitability of the driver for the driving situation are taken into consideration for the assessment of suitability.

14. Driver assistance system having a computation unit and having a memory, wherein the computation unit is connected to an input for inputting an activation request and wherein the computation unit is configured to carry out a method according to one of the preceding claims.

15. Computer program product having program code means that are suitable for carrying out a method according to Claims 1 to 13 on a computation unit.

## Revendications

1. Procédé pour activer un système d'assistance au conducteur dans un véhicule, selon lequel, après un souhait d'activation d'un système d'assistance au conducteur par un conducteur, un contrôle est effectué afin de vérifier si le conducteur du véhicule est apte à utiliser le système d'assistance au conducteur souhaité, et selon lequel l'activation du système d'assistance au conducteur souhaité est effectuée en fonction de l'aptitude du conducteur.

2. Procédé selon la revendication 1, un comportement de commande du véhicule par le conducteur étant déterminé, et le comportement de commande détecté étant utilisé pour évaluer une aptitude du conducteur à utiliser le système d'assistance au conducteur souhaité.

3. Procédé selon l'une des revendications précédentes, le système d'assistance au conducteur souhaité étant activé lorsqu'il résulte du contrôle que le conducteur est apte, l'activation du système d'assistance au conducteur souhaité étant inhibée lorsque le conducteur est estimé être inapte.

4. Procédé selon l'une des revendications précédentes, le conducteur pouvant activer le système d'assistance au conducteur souhaité par le biais d'un système d'entrée malgré que le conducteur soit estimé être inapte.

5. Procédé selon l'une des revendications précédentes, une valeur mise en mémoire étant prise en compte pour le contrôle de l'aptitude du conducteur.

6. Procédé selon la revendication 5, des valeurs différentes étant mises en mémoire pour des conducteurs différents, le conducteur étant reconnu au moyen d'un procédé de détection et la valeur associée au conducteur reconnu étant utilisée pour le contrôle.

7. Procédé selon la revendication 5 ou 6, une valeur étant déterminée à partir d'un comportement de commande du véhicule par le conducteur, laquelle est utilisée pour une comparaison avec la valeur comparative mise en mémoire.

8. Procédé selon l'une des revendications précédentes, le comportement de commande du conducteur étant détecté pendant qu'un système d'assistance au conducteur est actif.

9. Procédé selon l'une des revendications précédentes, un comportement de commande étant détecté en fonction d'une situation de conduite donnée.

10. Procédé selon la revendication 9, le comportement de commande du conducteur étant évalué différemment en fonction du système d'assistance au conducteur et/ou en fonction de la situation de conduite.

11. Procédé selon l'une des revendications 2 à 10, un conducteur étant reconnu à l'aide d'un comportement de détection et le comportement de commande étant détecté et mis en mémoire individuellement pour chaque conducteur.

12. Procédé selon l'une des revendications 1 à 11, l'évaluation de l'aptitude du conducteur étant effectuée en utilisant une valeur de l'aptitude du conducteur qui a été déterminée pendant un état actif du système d'assistance au conducteur souhaité.

13. Procédé selon l'une des revendications 1 à 12, une situation de conduite en présence et une valeur correspondante pour l'aptitude du conducteur étant en plus prises en compte pour l'évaluation de l'aptitude.

14. Système d'assistance au conducteur comprenant une unité de calcul et comprenant une mémoire, l'unité de calcul étant reliée à un système d'entrée destiné à la saisie d'un souhait d'activation et l'unité de calcul étant conçue pour mettre en oeuvre un procédé selon l'une des revendications précédentes.

15. Produit de programme informatique comprenant des moyens de code de programme qui sont aptes à mettre en oeuvre un procédé selon l'une des revendications 1 à 13 sur une unité de calcul.
